# EUROPEAN PATENT SPECIFICATION

(11) **EP 4 209 690 B1**
(45) Date of publication and mention of the grant of the patent: **25.02.2026**
(21) Application number: 23151014.0
(22) Date of filing: 10.01.2023
(51) Int. Cl.: F16D 41/00, F16D 41/08

(54) **CLUTCH AND WORK MACHINE HAVING SAME**
KUPPLUNG UND ARBEITSMASCHINE DAMIT
EMBRAYAGE ET MACHINE DE TRAVAIL LE COMPRENANT

(30) Priority: 11.01.2022 CN 202210028937; 01.12.2022 CN 202211538123
(43) Date of publication of application: 12.07.2023
(73) Proprietor: Techtronic Cordless GP, Anderson, SC 29621 (US)
(72) Inventor: CHEN, You Liang, Anderson, 29621 (US)
(74) Representative: Zimmermann & Partner Patentanwälte mbB

(56) References cited:
- US-A- 3 249 185
- US-A1- 2002 185 353

## Description

### Technical field

The present invention relates to a clutch and a work machine having same.

### Background art

Walk-behind work machines such as lawnmowers are generally provided with wheels for movement. The wheels enable the operator to move the walk-behind work machine to different work sites to perform corresponding work tasks. In some application scenarios, the operator may provide the driving force needed to move the work machine. In other application scenarios, the driving force may also be provided by a primer mover (such as a motor or internal combustion engine) provided on the work machine, the prime mover being coupled to the wheels by means of a transmission apparatus (such as a gearbox comprising a clutch), to realize transmission of the driving force, in which case the work machine may have a self-propulsion function. Document US 3 249 185 A relates to a one way reversible clutch. Document US 2002/185353 A1 relates to a freewheeling bidirectional clutch.

When the driving force is provided by a prime mover, it is desirable that the transmission apparatus be able to provide a stable and efficient transmission coupling. When an external traction force provided by the operator or another external apparatus serves as the driving force (in particular in a state in which the prime mover has stopped operating), it is desirable that the transmission apparatus be able to break the transmission coupling between the prime mover and the wheels, to prevent the prime mover from rotating with the wheels and causing a large amount of resistance. At present, walk-behind work machines are generally provided with a control apparatus such as a control rod and pull wire; the operator can switch manually between states of the transmission apparatus by means of the control apparatus, to establish or break the transmission coupling according to different operating modes. Such a manner of operation requires manual intervention and is quite complex, and is unable to achieve automatic switching between states of the transmission apparatus according to the operating state of the prime mover.

Thus, there is a need to provide an alternative solution to at least partially alleviate or mitigate the abovementioned shortcomings.

### Summary of the invention

The objective of the present invention is to provide a clutch and a work machine having same, to achieve automatic switching between transmission states of a transmission apparatus according to the operating state of a prime mover while providing other additional advantages, such as the structure of the transmission apparatus being smaller and more compact, realizing a differential function, etc.

A clutch according to one aspect of the present invention comprises:
an input member, the input member being configured to receive a driving force and rotatable about a rotation axis under the action of the driving force, the input member having at least one protrusion extending in a radial direction relative to the rotation axis;
an output member, the output member being configured to output rotational motion and having at least one transmission engagement part;
at least one transmission member, the at least one transmission member being configured to be movable between a first position in which it is engageable with the transmission engagement part and a second position of disengagement, the at least one transmission member being located in a path of rotational motion of the protrusion, and able to abut the protrusion and be driven to move to the first position, wherein displacement of the at least one transmission member between the first position and the second position has a component in the radial direction.

In some embodiments, the clutch further comprises a biasing member, which biases the at least one transmission member towards the second position.

In some embodiments, the biasing member is a spring, the spring having one end coupled to the at least one transmission member, and another end coupled to the input member or a mounting member for mounting the at least one transmission member.

In some embodiments, the at least one transmission member is able to abut the protrusion and be driven to move to the second position.

In some embodiments, a sharp bump is provided at an inner side of the at least one transmission member, the sharp bump being able to abut the protrusion when the input member rotates in a direction opposite to a drive direction.

In some embodiments, the clutch is configured such that the input member rotates through a predetermined angle in a direction opposite to a drive direction when the outputting of rotational motion is stopped.

In some embodiments, the at least one transmission member moves in a plane perpendicular to the rotation axis.

In some embodiments, the at least one transmission member moves in the plane between the first position and the second position along a straight line inclined relative to the radial direction.

In some embodiments, the protrusion comprises three protrusions arranged at uniform intervals in the circumferential direction about the rotation axis, and the at least one transmission member comprises three transmission members arranged in one-to-one correspondence with the protrusions.

In some embodiments, the transmission engagement part of the output member comprises a stop wall extending parallel to the rotation axis, the at least one transmission member abutting the stop wall to achieve engagement with the transmission engagement part.

In some embodiments, the stop wall extends substantially in the radial direction.

In some embodiments, when the at least one transmission member is located at the second position, the at least one transmission member is located outside a path of rotational motion of the stop wall.

In some embodiments, the output member is provided with a cam surface extending parallel to the rotation axis; the cam surface is located between two adjacent stop walls, and connects a radially outside end of one of the stop walls to a radially inside end of the other adjacent stop wall, at least part of the cam surface being a curved surface.

In some embodiments, in the direction of the driving force, the angular velocity of rotation of the output member is greater than or equal to the angular velocity of rotation of the input member.

In some embodiments, the clutch further comprises a mounting member for mounting the at least one transmission member, the mounting member being provided with an elongated slot defining a movement path of the at least one transmission member between the first position and the second position.

In some embodiments, the elongated slot comprises a curved surface, to allow the at least one transmission member to pivot in the elongated slot.

In some embodiments,
the output member is provided with a recess, and at least one of the at least one transmission member, the mounting member and the input member is at least partially disposed in the recess; or
the input member is provided with a recess, and at least one of the at least one transmission member, the mounting member and the output member is at least partially disposed in the recess.

In some embodiments, the mounting member is provided with a mounting slot formed as a sunken cavity, the input member being accommodated in the sunken cavity.

In some embodiments, the mounting member is provided with a damping element, the damping element being configured to be able to provide damping so that the mounting member tends to remain stationary.

In some embodiments, the damping element provides damping by rubbing against a member other than the input member and the transmission member, in particular by rubbing against a transmission case accommodating the clutch.

In some embodiments, the damping element is made of a rubber or silicone rubber material, and extends radially outwards relative to the mounting member.

A work machine according to another aspect of the present invention comprises a prime mover, at least one wheel and the clutch as described above, the prime mover driving the input member of the clutch, and the output member of the clutch driving at least one of the at least one wheel to rotate.

In some embodiments, the work machine comprises two clutches arranged in a mirror-image fashion, each clutch being coupled to at least one corresponding wheel.

In some embodiments, the work machine is a gardening tool, in particular a lawnmower or a snow blower.

The clutch and work machine according to the present invention are able to achieve the following beneficial effects:
1) The transmission member can move automatically to the first position of engagement with the output member under the action of the radially extending protrusion of the input member, and can move automatically to the second position of disengagement from the output member under the action of the biasing member when the input member stops moving. The function of automatically switching between transmission states according to the operating state of the prime mover is thereby achieved.
2) Displacement of the transmission member between the first position and second position comprises a radial component, helping to reduce the axial thickness of the clutch along the rotation axis, so that the structure of the clutch is more compact.
3) In some preferred embodiments, a speed differential function can be achieved.

### Brief description of the drawings

To better understand the above and other objectives, features, advantages and functions of the present invention, the preferred embodiments shown in the drawings may be referred to. In the drawings, identical reference labels denote identical components. Those skilled in the art should understand that the drawings are intended to illustrate preferred embodiments of the present invention schematically, and have no limiting effect on the scope of the present invention, and the various components in the drawings are not drawn to scale.
Fig. 1 is a 3D drawing of a work machine according to a preferred embodiment of the present invention.
Fig. 2 is a 3D drawing of the work machine shown in Fig. 1, viewed from another angle.
Fig. 3 is a 3D drawing of a clutch according to a preferred embodiment of the present invention.
Fig. 4 is a 3D drawing of the clutch shown in Fig. 3, viewed from another angle.
Fig. 5 is a schematic drawing of the clutch shown in Fig. 3 in a disengaged state, with the mounting member omitted.
Fig. 6 is a schematic drawing of the clutch shown in Fig. 3 in an engaged state, with the mounting member omitted.
Fig. 7 is a rear view of the clutch shown in Fig. 3, with the output member omitted, showing a biasing member configured as a spring.
Fig. 8 is a front view of a clutch according to another preferred embodiment of the present invention.
Fig. 9 is a 3D view of a clutch according to another preferred embodiment of the present invention.
Fig. 10 shows a transmission path of a work machine according to the present invention, from the prime mover to the clutch; and
Fig. 11 is part of a sectional view taken along line A-A in Fig. 10.

### Key to the drawings:

- 1: lawnmower
- 10: base
- 11: cutting tool
- 12: wheel
- 13: hand support frame
- 20: prime mover
- 201: output shaft
- 21: transmission apparatus
- 211: first gear
- 212: second gear
- 213: third gear
- 214: fourth gear
- 215: fifth gear
- 216: coupling shaft
- 22: transmission case
- 30/30'/30": clutch
- 31/31': input member
- 311: input engagement part
- 312: protrusion
- 32/32': output member
- 321: output engagement part
- 322: transmission engagement part
- 323: cam surface
- 323a: downstream end
- 323b: upstream end
- 324: recess
- 33/33': transmission member
- 331: pin structure
- 332: sharp bump
- 34/34": mounting member
- 341: elongated slot
- 342: fastener
- 343: first mounting slot
- 344: second mounting slot
- 345: damping element
- 346: holding part
- 35: spring
- 40: drive shaft
- AX: rotation axis
- F: drive direction
- F1: direction opposite to drive direction

### Detailed description of embodiments

Particular embodiments of the present invention are now described in detail with reference to the drawings. The embodiments described here are merely preferred embodiments of the present invention.

The present invention provides a work machine, in particular a gardening tool, which is able to move between different positions by means of wheels under the action of an external traction force and/or a driving force provided by its own prime mover. In addition, the present invention further provides a clutch for the work machine. The clutch is disposed between the prime mover and the wheels, and used to transmit the driving force of the prime mover to the wheels.

The work machine is preferably provided with a hand support frame, to facilitate gripping and application of force by the operator. Such a work machine may also be called a walk-behind work machine. One example of a walk-behind work machine is a lawnmower, which is configured to be able to move over the growth surface of grass or a lawn and be operated to perform a grass-cutting function. Such an action is usually referred to as "trimming a lawn", and is generally performed by a gardener or landscape worker to maintain the surface of the lawn. In addition, other examples of walk-behind work machines may be snow blowers, plowing machines, micro tillers and wheeled vacuum cleaners. Preferred embodiments according to the present invention are presented in detail below with reference to the drawings.

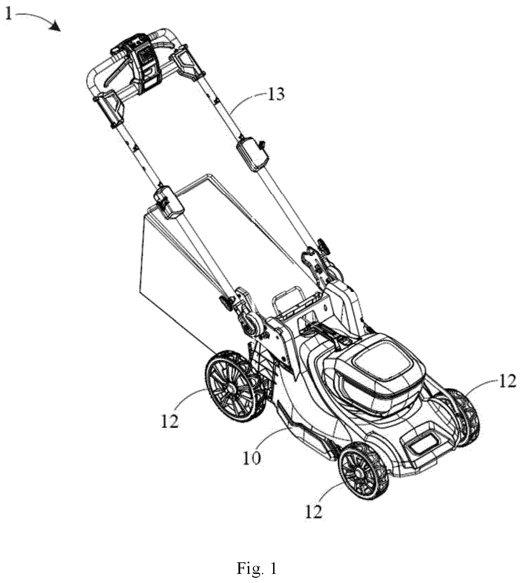

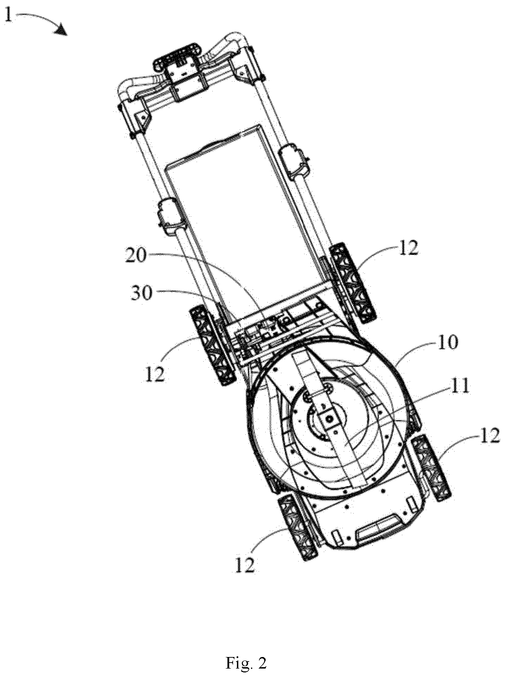

Figs. 1 and 2 show a lawnmower 1 as an example of the work machine according to the present invention, at least comprising a base 10, a cutting tool 11, wheels 12, a hand support frame 13, a prime mover 20 and a transmission apparatus 21. The cutting tool 11 is disposed at the bottom of the base 10, and can perform a job under the action of a driving force provided by the prime mover 20, to cut and clear weeds on a lawn. The wheels 12 are used to support the lawnmower 1 on a working surface (such as a lawn), and can rotate under the action of a driving force provided by the prime mover 20, to move the lawnmower 1 between different positions. The same prime mover 20 may be used to provide the driving forces to the wheels 12 and the cutting apparatus 11 respectively, or different prime movers 20 may be provided to provide the driving forces separately. In the embodiment shown in the figures, the lawnmower 1 comprises four wheels 12, arranged opposite each other at left and right sides of a front end and a rear end of the base 10 respectively, to realize stable support. Of course, in other embodiments, the number of wheels 12 may be set to one, two, three or more as required. The hand support frame 13 is disposed at a rear part of the lawnmower 1 and is angled upwards obliquely towards the rear, so that it can be conveniently gripped by the operator in the course of working to push the lawnmower 1 forwards and backwards.

Referring to Fig. 2, the prime mover 20 is disposed at the rear end of the base 10, close to the wheels 12 located at the rear end. The transmission apparatus 21 is located between the prime mover 20 and the wheels 12, and used to transmit a driving force therebetween. An example of the prime mover 20 could be an electric motor or internal combustion engine, etc., which may be configured to provide a driving force to only one wheel 12, or may provide a driving force simultaneously to two or more wheels 12. It is also possible to provide more than one primer mover 20 and transmission apparatus 21, to drive multiple wheels 12 separately. In the case where the prime mover 20 provides a driving force, a driven wheel 12 may be called a driving wheel, and a wheel 12 which rotates passively as the lawnmower 1 moves may be called a driven wheel. In the embodiment shown, the two wheels 12 close to the rear end of the base 10 are driven by the prime mover 20, so are driving wheels. The two wheels close to the front end of the base 10 are driven wheels.

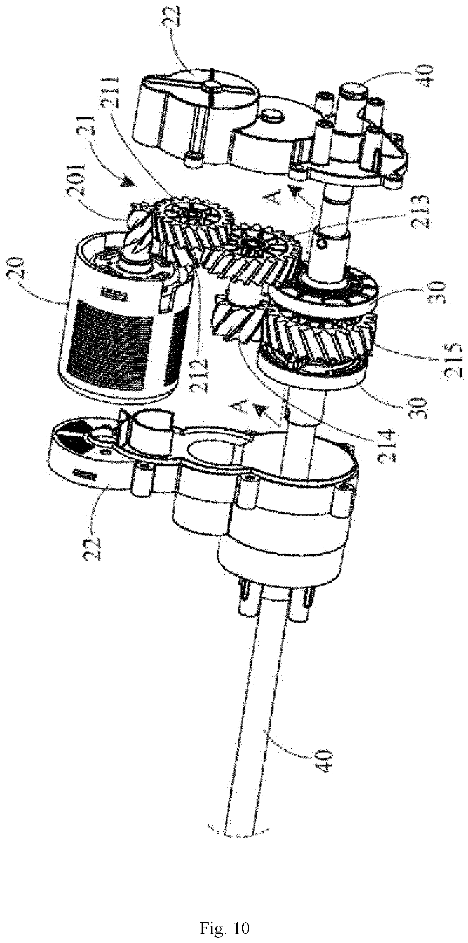

Fig. 10 shows the transmission path from the prime mover 20 to the driving wheels via the transmission apparatus 21. In some embodiments, the transmission apparatus 21 comprises a transmission gear train and a clutch. An output shaft of the prime mover 20 is transmission-coupled to the clutch 30 via the transmission gear train, and further transmission-coupled to the driving wheels via the clutch 30. In the embodiment shown, an extremity of the output shaft 201 of the prime mover 20 is configured in the form of a gear, and meshed with a first gear 211 of the transmission gear train. The output shaft 201 and the first gear 211 have substantially the same linear velocity. However, the diameter of the first gear 211 is greater than the diameter of the output shaft 201, so the speed outputted by the prime mover 20 is reduced a first time at the first gear 211. The first gear 211 and a second gear 212 are arranged coaxially, and have substantially the same angular velocity. The second gear 212 and a third gear 213 are meshed, and have substantially the same linear velocity, but the diameter of the third gear 213 is greater than the diameter of the second gear 212. Thus, the speed outputted by the prime mover 20 is reduced a second time at the third gear 213. The third gear 213 is further arranged coaxially with a fourth gear 214. The fourth gear 214 and a fifth gear 215 are meshed, and have substantially the same linear velocity, but the diameter of the fifth gear 215 is greater than the diameter of the fourth gear 214. Thus, the speed outputted by the prime mover 20 is reduced a third time at the fifth gear 215. It will be understood that in different embodiments, it is possible to flexibly choose the number of stages in the transmission gear train and whether the transmission result is a reduction in speed or an increase in speed, according to actual needs.

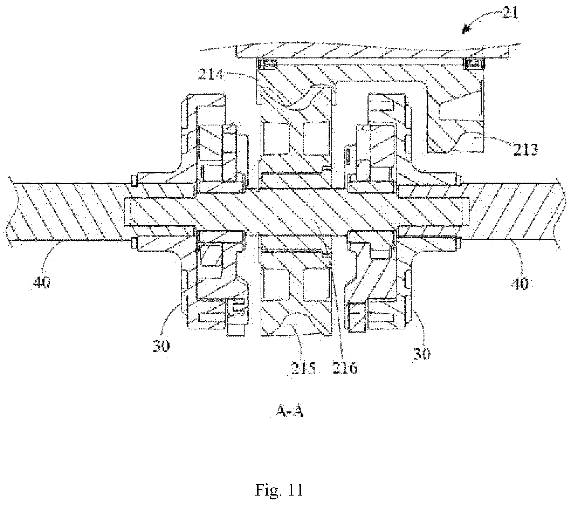

As shown in Fig. 11, the fifth gear 215 forms a final-stage gear of the transmission gear train. Furthermore, the transmission gear train further comprises a coupling shaft 216 arranged coaxially with the fifth gear 215. Optionally, the final-stage gear of the transmission gear train is transmission-coupled to two clutches 30 simultaneously. These two clutches 30 are arranged substantially in a mirror-image fashion relative to the final-stage gear. Output ends of the two clutches 30 are coupled to respectively corresponding drive shafts 40. An extremity of each drive shaft 40 is further coupled to one driving wheel (not shown) respectively. For example, the extremity of the drive shaft 40 may be coupled to the driving wheel directly via a pin or splines, etc. Alternatively, a gear structure may be provided at the extremity of the drive shaft 40, and a ring gear may be provided on the driving wheel, with the transmission coupling being accomplished by meshing of the gear structure with the ring gear. In this way, the lawnmower 1 is able to drive the two driving wheels at the left and right sides simultaneously by means of a single prime mover 20 cooperating with a single transmission apparatus 21. The transmission gear train and the clutches 30 form the main part of the transmission apparatus 21. Furthermore, a transmission case 22 is also provided, in which the transmission gear train and the clutches 30 are accommodated, and which serves a protecting function, preventing the ingress of debris while also providing lubrication for the transmission gear train and other structures. Furthermore, having the clutches arranged in a mirror-image fashion can allow a speed differential (described in detail below) to arise between the driving wheels respectively corresponding to the two clutches, thereby allowing the work machine to accomplish a turning action without the prime mover 20 stopping operation, thus making it easier to operate the work machine.

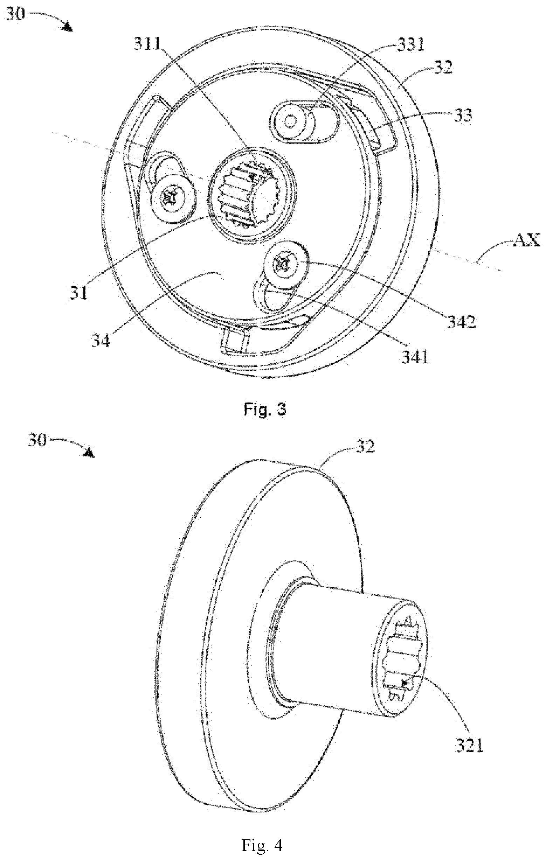

Figs. 3 - 6 show the clutch 30 according to some embodiments of the present invention, mainly comprising an input member 31, an output member 32 and transmission members 33.

The input member 31 for example has an input engagement part 311 configured as an internal spline structure, and may be coupled to the prime mover 20 directly (not via a drive train) or indirectly (via a drive train) by means of the input engagement part 311, thereby being able to receive a driving force from the prime mover 20, and rotate around a rotation axis AX in a drive direction F under the action of the driving force. The output member 32 is used to output rotational motion to the outside, and for example has an output engagement part 321 configured as an internal spline structure, and may be coupled to at least one wheel 12 directly or indirectly by means of the output engagement part 321, thereby being able to drive at least one wheel 12 to rotate. As shown in Fig. 10, in some embodiments, the input engagement part 311 is coupled to the prime mover 20 via the transmission gear train, while the output engagement part 321 is coupled to the wheel 12 (driving wheel) via the drive shaft 40.

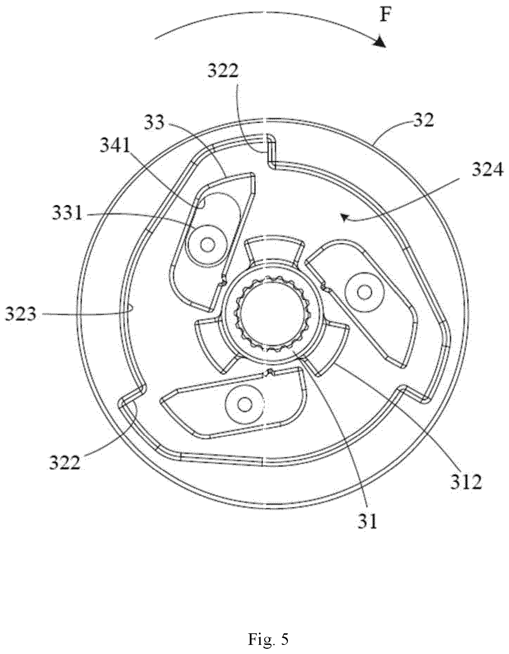

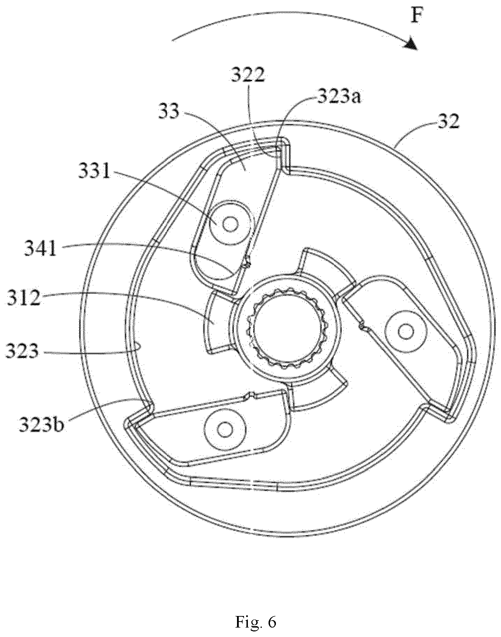

The transmission members 33 are movably arranged between the input member 31 and the output member 32. When the transmission members 33 are located at a first position as shown in Fig. 6, they can engage with the output member 32, transmitting the rotational motion of the input member 31 to the output member 32, such that the output member 32 rotates together with the input member 31. At this time, the clutch 30 is in an engaged state. When the transmission members 33 move to a second position as shown in Fig. 5, they disengage from the output member 32, at which time there is no driving force acting on the output member 32 via the input member 31, so the output member 32 remains stationary. The clutch 30 is in a disengaged state. The transmission members 33 may also be called movable pawls.

It will be understood that during normal driving, the input member 31 drives the output member 32 to rotate by means of the transmission members 33, in turn driving the wheel 12 to rotate by means of the drive shaft 40. At this time, the input member 31 and the output member 32 have substantially the same angular velocity of rotation. As stated above, in some embodiments, two clutches 30 are transmission-coupled to the same final-stage gear, and arranged in a mirror-image fashion relative to the final-stage gear. Furthermore, the clutch 30 is configured to allow the angular velocity of rotation of the output member 32 to be greater than the angular velocity of rotation of the input member 31. **In** this way, when the operator applies an external traction force to the wheel 12 at one side or applies unbalanced external traction forces to the wheels 12 at both sides, the wheel 12 at one side acted on by the larger force has a greater rotation speed than the wheel 12 at the other side acted on by the smaller force, i.e. a speed differential forms, at which time the work machine is able to accomplish a turning action. Since the angular velocity of rotation of the output member 32 of the clutch can be greater than the angular velocity of rotation of the input member 31, such an operation can automatically achieve a speed differential effect, without the need to manually switch the clutch 30 to the disengaged state. When the external traction force disappears, the clutch 30 will automatically re-enter the engaged state under the action of the driving force of the prime mover 20.

According to the present invention, when the driving force acts on the input member 31, the clutch 30 can automatically switch to the engaged state without the need for active operation by the operator, to output rotational motion to the outside. Specifically, referring to Figs. 5 and 6, the input member 31 has protrusions 312 extending outwards in radial directions relative to the rotation axis AX. The transmission members 33 are disposed in the path of rotational motion of the protrusions 312. When the driving force acts on the input member 31, the protrusions 312 rotate around the rotation axis AX, and thereby contact the transmission members 33. As the rotational motion continues, the transmission members 33 are driven to move to the first position shown in Fig. 6 under the action of the protrusions 312.

The output member 32 is provided with transmission engagement parts 322. In the embodiment shown, the transmission engagement parts 322 are configured in the form of stop walls extending substantially parallel to the rotation axis AX. When the transmission members 33 move to the first position, they abut the stop walls, thereby engaging with the transmission engagement parts 322. Thus, the transmission members 33 transmit the action force of the protrusions 312 to the transmission engagement parts 322, so that the output member 32 rotates together with the input member 31. The clutch 30 automatically switches to the engaged state. Preferably, the stop walls extend substantially in said radial directions.

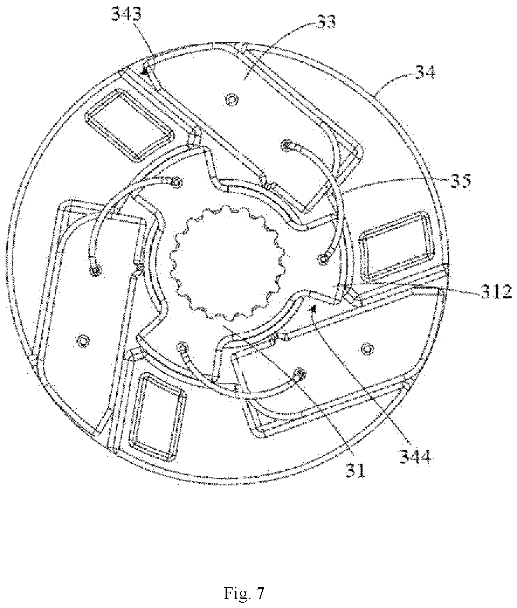

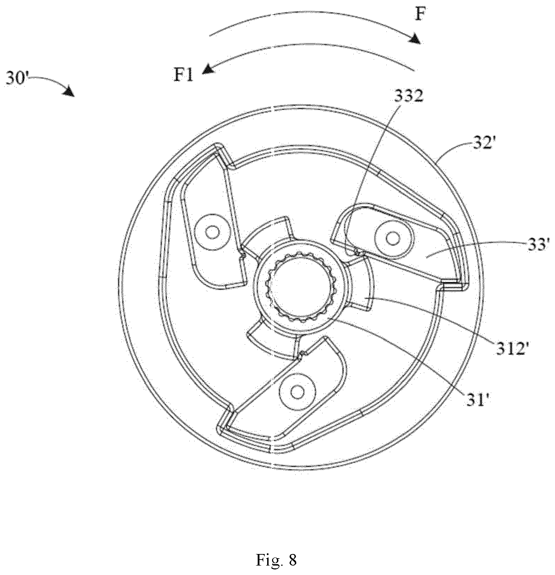

In some embodiments, the clutch 30 is further provided with biasing members, which apply a biasing force to the transmission members 33 to bias them towards the second position. As shown in Fig. 7, the biasing member may for example a spring 35, having one end coupled to the transmission member 33, and another end coupled to the protrusion 312 which drives the transmission member 33 to move towards the first position. Preferably, the clutch 30 is further configured such that when the outputting of rotational motion is stopped, the input member 31 rotates through a predetermined angle in a direction F1 (see Fig. 8) opposite to the drive direction. This configuration may be accomplished by, for example, causing the prime mover to rotate in reverse for a predetermined time (e.g. 0.1 s) or through a predetermined angle after ceasing to operate. Thus, after the prime mover has ceased to operate, the input member 31 rotates in reverse through a predetermined angle, a sufficient gap arises between the protrusion 312 and the transmission member 33, and the transmission member 33 can move from the first position to the second position shown in Fig. 5 under the action of the biasing member, thereby causing the clutch 30 to automatically switch to the disengaged state.

In some other embodiments, the biasing member may be omitted, and the transmission member may be moved to the second position by the protrusion of the input member abutting the transmission member. Referring to the clutch 30' shown in Fig. 8, a sharp bump 332 is provided on an inner side of the transmission member 33'. When the outputting of rotational motion is stopped, the input member 31' rotates through a predetermined angle in the direction F1 opposite to the drive direction. In the course of rotating in reverse, the protrusion 312' abuts the sharp bump 332 of the adjacent transmission member 33' located behind (i.e. upstream of) the protrusion in the drive direction F. As the rotation in reverse continues, the protrusion 321' drives the transmission member 33' to move to the second position. It will be understood that with such a configuration, the force applied to the sharp bump 332 by the protrusion 312' is in a direction tangential to the direction of rotation thereof, so might cause the transmission member 33' to pivot in the process of moving towards the second position.

In the second position, the transmission members 33 are located completely outside the path of rotational motion of the transmission engagement parts 322. At this time, the output member 32 can freely rotate independently of the input member 31 and the transmission members 33. In other words, if the operator wishes that the lawnmower 1 be driven to move by an external traction force (such as a pushing or pulling force applied by the operator or another external driving means) when the prime mover 20 has stopped operating, the wheel 12 coupled to the output member 32 of the clutch 30 need only drive the output member 32 to rotate with it. No action force will arise between the output member 32 and the transmission members 33/input member 31 or transmission gear train/prime mover 20. It is thus possible to reduce resistance when an external traction force drives the lawnmower 1. Moreover, at this time the wheel 12 can also drive the output member 32 to rotate in reverse, without interfering with the transmission members 33 or the input member 31. That is to say, the operator can pull the lawnmower 1 backwards.

As shown in Fig. 4, preferably, the clutch 30 further comprises a mounting member 34, configured as a disc-shaped structure and provided with elongated slots 341. Correspondingly, the transmission members 33 are provided with protruding pin structures 331. The transmission members 33 may be mounted on the mounting member 34 by insertion of the pin structures 331 into the elongated slots 341. Preferably, the elongated slot 341 is a penetrating slot, and a fastener 342 comprising a spacer and a screw is provided at an end of the pin structure 331. The size of at least the spacer is greater than the width of the elongated slot 341, to prevent the pin structure 331 from coming out of the elongated slot 341. It will be understood that in another embodiment, it is also possible to have the elongated slot provided in the transmission member, and have the pin structure cooperating therewith provided on the mounting member.

In addition, in an embodiment in which a biasing member is used to drive the transmission member, the mounting member may also be used to provide a force application point for the biasing member configured as a spring. One end of the spring is still coupled to the transmission member, while the other end is coupled to the mounting member, not to the protrusion of the input member as described above. The specific form of the spring may be chosen flexibly as required, e.g. a tension spring, a torsion spring, a coil spring, a specially-shaped spring, etc.

When the transmission member 33 moves between the first position and the second position, the pin structure 331 moves in the length direction of the elongated slot 341. Thus, the elongated slot 341 defines the path of movement of the transmission member 33 between the first position and the second position. According to the present invention, the movement path of the transmission member 33 has a component in a radial direction relative to the rotation axis AX. That is to say, movement of the transmission member 33 between the first position and the second position causes a change in the radial position thereof relative to the rotation axis AX. Preferably, the movement path of the transmission member 33 lies completely within a plane perpendicular to the rotation axis AX. That is to say, movement of the transmission member 33 between the first position and the second position will not give rise to axial displacement along the rotation axis AX. Such a configuration helps to reduce the axial thickness of the clutch 30 along the rotation axis AX, and will not give rise to a change in the axial dimension during operation, so makes the structure thereof compact.

Further preferably, the path of movement of the transmission member 33 between the first position and the second position is a straight line which is inclined relative to a radial direction. For example, the movement path may be substantially in a direction tangential to the path of rotational motion of the protrusion 312, or may deviate from this tangential direction by a small angle; in this way, the action torque applied to the transmission member 33 by the protrusion 312 can be maximized. Moreover, correspondingly, it is only necessary for the elongated slot 341 to be configured as a straight slot, so the structure is simple. However, it will be understood that the path of movement of the transmission member 33 between the first position and the second position may also be configured as a curve as required, i.e. the elongated slot 341 is a curved slot. In addition, the elongated slot may comprise a curved surface, to allow pivoting of the transmission member in the process of moving towards the second position, in an embodiment in which the protrusion is used to drive the transmission member towards the second position.

Referring to Fig. 7, the mounting member 34 is provided with first mounting slots 343. The first mounting slots 343 are substantially configured to be elongated in shape, and are open at a circumferential side of the mounting member 34. The transmission members 33 are accommodated in the first mounting slots 343, and are capable of moving along the first mounting slots 343 to the first position in which they project through the openings thereof, and retreating to the second position. Thus, the first mounting slots 343 can also serve to define the movement paths of the transmission members 33. **In** addition, a substantially round second mounting slot 344 is further provided in a middle region of the mounting member 34, the second mounting slot communicating with the first mounting slots 343. The input member 31 is accommodated in the second mounting slot 344 and is freely rotatable in the second mounting slot 344. Such a configuration can further reduce the axial thickness of the clutch 30.

It will be understood that if there is an action force between the transmission member and the mounting member, for example a frictional force, then when the input member pushes the transmission member, the latter might be unable to overcome the action force to move relative to the mounting member to the first position, and will instead directly drive the mounting member to rotate under the action of the action force. Since the transmission member has not moved to the first position, it will not engage with the output member, and the clutch will idle in the disengaged state.

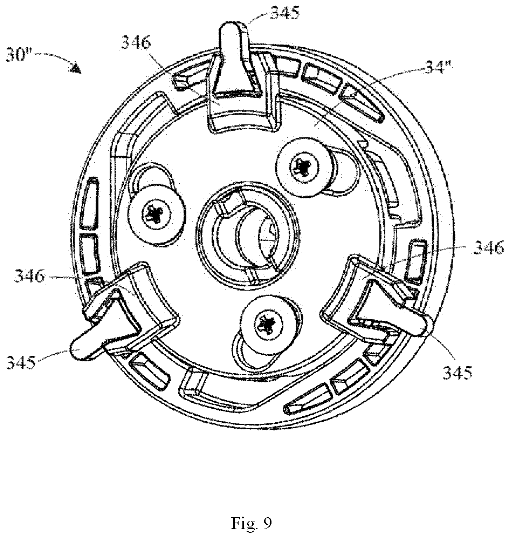

To avoid this problem, referring to Fig. 9, in the clutch 30" according to some embodiments, the mounting member 34" is provided with damping elements 345, which can provide damping for the mounting member 34", so that it tends to remain stationary. The damping elements 345 may be entirely or partially made of a rubber or silicone rubber material with a large coefficient of friction, may extend radially outwards relative to the mounting member 34", and are in contact with an inner wall of the transmission case mentioned above for example. **In** addition, the mounting member 34" is provided with holding parts 346 for mounting the damping elements 345. When the input member rotates under the driving action of the prime mover, the protrusions of the input member abut the transmission members and push them to move towards the first position. At this time, the damping elements 345 rub against the inner wall of the transmission case, providing damping for the mounting member 34", so that it tends to remain stationary. **In** this way, the transmission member is able to overcome the action force between the transmission member and the mounting member 34" under the pushing action of the input member, and move smoothly relative to the mounting member 34" to the first position, so as to engage with the output member.

As shown in Fig. 5, the output member 32 is provided with a recess 324 sunk along the rotation axis AX; at least part of at least one of the transmission members 33, the mounting member 34 and the input member 31 is disposed in the recess 324. Such a configuration can likewise further reduce the axial thickness of the clutch 30 along the rotation axis AX. **In** another embodiment, when the input member has a larger radial dimension and the output member has a smaller radial dimension, it is also possible to have the recess provided in the input member, and have the transmission members, the mounting member and the output member at least partially disposed in the recess.

It will be understood that at least one protrusion 312, at least one transmission member 33 and at least one transmission engagement part 322 may be provided, to enable transmission of the driving force. In the embodiment shown, the clutch 30 is provided with three sets of protrusions 312, transmission members 33 and transmission engagement parts 322 which are in one-to-one correspondence and cooperate with each other; this three-set structure is distributed at uniform intervals in the circumferential direction about the rotation axis AX. However, the numbers of cooperating protrusions, transmission members and transmission engagement parts may be chosen flexibly according to changes in the dimensions and structure of the clutch; moreover, the protrusions and transmission members are not necessarily in a one-to-one correspondence relationship with the transmission engagement parts, as long as transmission of the driving force can be achieved. For example, in some embodiments, the number of transmission engagement parts may be twice that of the protrusions and transmission members, etc.

In some embodiments, the output member 32 is further provided with cam surfaces 323, configured as faces that face the transmission members 33 and are substantially parallel to the rotation axis AX, and each having a downstream end 323a and an upstream end 323b in the drive direction F, these two ends being respectively connected to two adjacent transmission engagement parts 322. Specifically, in the embodiment shown in which the transmission members 33 are located at a radially inner side of the transmission engagement parts 322, the downstream end 323a of the cam surface 323 is connected to a radially outside end of the corresponding stop wall, while the upstream end 323b of the cam surface 323 is connected to a radially inside end of the corresponding stop wall (i.e. the adjacent stop wall located behind the stop wall connected to the downstream end 323a in the drive direction F). Preferably, at least part of the cam surface 323 is a smooth curved surface.

As an alternative embodiment, when the transmission members are located at a radially outer side of the transmission engagement parts, the downstream end of the cam surface should be connected to a radially inside end of the corresponding stop wall, while the upstream end of the cam surface should be connected to a radially outside end of the corresponding stop wall.

When the prime mover 20 is in an operational state, if an external traction force is applied at the same time, for example the lawnmower 1 is pushed manually, then the rotation speed of the wheels 12 increases, and the output members 32 coupled to the drive shafts 40 are driven via the drive shafts to rotate at a faster speed. The stop wall structure described above allows the output member 32 to rotate at a higher angular velocity than the input member 31 and transmission members 33. That is to say, the angular velocity of the stop walls is greater than the angular velocity of the transmission members 33 in abutment therewith, so the transmission members 33 move backwards relative to the abutted stop walls and thereby disengage, and slide along the cam surfaces 323. The cam surfaces 323 may press the transmission members 33 back to the second position, such that the clutch 30 automatically switches to the disengaged state. Thus, even if the transmission members 33 are located in the path of rotational motion of the transmission engagement parts 322 at this time, they will not cause interference to relative motion between the output member 32 and the transmission members 33.

Such a configuration allows the output member 32 to move at a higher speed relative to the input member 31 and the transmission members 33. For example, in the process of the lawnmower 1 being driven by the prime mover 20, when it is necessary to turn, the operator can apply a pushing force, so that the wheel 12 of the lawnmower 1 that is located at the outer side of the turning radius rotates at a faster speed, and a speed differential thus arises between the wheels 12 at the inner and outer sides of the turning radius, to smoothly accomplish the turning action. Due to the presence of the clutch 30, even if the operator does not stop the prime mover 20, it will not cause any interference or effect on the driving of the wheel 12 located at the outer side of the turning radius - this is very convenient. When turning is complete, the operator stops applying the pushing force, the rotation speed of the wheel 12 falls until it is equal to or slightly less than the rotation speed of the input member 31 and transmission members 33 of the clutch 30, the transmission members 33 are pushed to the first position by the input member 31, the clutch 30 automatically switches to the engaged state, and the lawnmower 1 can thus return to the pre-turning state of being driven by the prime mover 20. The clutch 30 is able to automatically switch between states to adapt to changes in the rotation speed of the wheels 12, without any need to manually switch the state of the clutch 30.

The above description of various embodiments of the present invention is provided to a person skilled in the art for descriptive purposes. It is not intended that the present invention be exclusively or limited to a single disclosed embodiment. As mentioned above, those skilled in the art will understand various alternatives and variations of the present invention. Thus, although some alternative embodiments have been specifically described, those skilled in the art will understand, or develop with relative ease, other embodiments.

## Claims

1. Clutch, comprising:
an input member (31), the input member (31) being configured to receive a driving force and rotatable about a rotation axis (AX) under the action of the driving force;
an output member (32), the output member (32) being configured to output rotational motion and having at least one transmission engagement part (322); and
at least one transmission member (33), the at least one transmission member (33) being configured to be movable between a first position in which it is engageable with the transmission engagement part (322) and a second position of disengagement, **characterized in that**, the input member (31) having at least one protrusion (312) extending in a radial direction relative to the rotation axis (AX); and the at least one transmission member (33) being located in a path of rotational motion of the protrusion (312), and able to abut the protrusion (312) and be driven to move to the first position, wherein displacement of the at least one transmission member (33) between the first position and the second position has a component in the radial direction.

2. Clutch according to Claim 1, **characterized in that** the clutch further comprises a biasing member, which biases the at least one transmission member (33) towards the second position; preferably, the biasing member is a spring (35), the spring (35) having one end coupled to the at least one transmission member (33), and another end coupled to the input member (31) or a mounting member (34) for mounting the at least one transmission member (33).

3. Clutch according to Claim 1, **characterized in that** the at least one transmission member (33) is able to abut the protrusion (312) and be driven to move to the second position; preferably, a sharp bump (332) is provided at an inner side of the at least one transmission member (33), the sharp bump (332) being able to abut the protrusion (312) when the input member (31) rotates in a direction (F1) opposite to a drive direction.

4. Clutch according to Claim 2 or 3, **characterized in that** the clutch is configured such that the input member (31) rotates through a predetermined angle in a direction (F1) opposite to a drive direction when the outputting of rotational motion is stopped.

5. Clutch according to any one of Claims 1 - 4, **characterized in that** the at least one transmission member (33) moves in a plane perpendicular to the rotation axis (AX); preferably, the at least one transmission member (33) moves in the plane between the first position and the second position along a straight line inclined relative to the radial direction.

6. Clutch according to any one of Claims 1 - 5, **characterized in that** the protrusion (312) comprises three protrusions arranged at uniform intervals in the circumferential direction about the rotation axis (AX), and the at least one transmission member (33) comprises three transmission members arranged in one-to-one correspondence with the protrusions (312).

7. Clutch according to any one of Claims 1 - 6, **characterized in that** the transmission engagement part (322) of the output member (32) comprises a stop wall extending parallel to the rotation axis (AX), the at least one transmission member (33) abutting the stop wall to achieve engagement with the transmission engagement part (322); preferably, the stop wall extends substantially in the radial direction; preferably, when the at least one transmission member (33) is located at the second position, the at least one transmission member (33) is located outside a path of rotational motion of the stop wall.

8. Clutch according to Claim 7, **characterized in that** the output member (32) is provided with a cam surface (323) extending parallel to the rotation axis (AX); the cam surface (323) is located between two adjacent stop walls, and connects a radially outside end of one of the stop walls to a radially inside end of the other adjacent stop wall, at least part of the cam surface (323) being a curved surface.

9. Clutch according to Claim 1, **characterized in that** in the direction of the driving force, the angular velocity of rotation of the output member (32) is greater than or equal to the angular velocity of rotation of the input member (31).

10. Clutch according to any one of Claims 1 - 9, **characterized in that** the clutch further comprises a mounting member (34) for mounting the at least one transmission member (33), the mounting member (34) being provided with an elongated slot defining a movement path of the at least one transmission member (33) between the first position and the second position; preferably, the elongated slot comprises a curved surface, to allow the at least one transmission member (33) to pivot in the elongated slot.

11. Clutch according to Claim 10, **characterized in that**
the output member (32) is provided with a recess (324), and at least one of the at least one transmission member (33), the mounting member (34) and the input member (31) is at least partially disposed in the recess (324); or
the input member is provided with a recess, and at least one of the at least one transmission member, the mounting member and the output member is at least partially disposed in the recess.

12. Clutch according to any one of Claims 9 - 11, **characterized in that** the mounting member (34) is provided with a mounting slot (344) formed as a sunken cavity, the input member (32) being accommodated in the sunken cavity.

13. Clutch according to any one of Claims 9 - 12, **characterized in that** the mounting member (34") is provided with a damping element (345), the damping element (345) being configured to be able to provide damping so that the mounting member (34") tends to remain stationary; preferably, the damping element (345) is made of a rubber or silicone rubber material, and extends radially outwards relative to the mounting member (34"); preferably, the damping element (345) provides damping by rubbing against a member other than the input member and the transmission member, in particular by rubbing against a transmission case (22) accommodating the clutch.

14. Work machine, **characterized by** comprising a prime mover, at least one wheel and the clutch according to any one of Claims 1 - 13, the prime mover driving the input member of the clutch, and the output member of the clutch driving at least one of the at least one wheel to rotate.

15. Work machine according to Claim 14, **characterized in that** the work machine comprises two clutches arranged in a mirror-image fashion, each clutch being coupled to at least one corresponding wheel.

## Patentansprüche

1. Kupplung, enthaltend:
ein Eingangselement (31), wobei das Eingangselement (31) dazu ausgelegt ist, eine Antriebskraft aufzunehmen und unter der Wirkung der Antriebskraft um eine Drehachse (AX) drehbar ist;
ein Ausgangselement (32), wobei das Ausgangselement (32) dazu ausgelegt ist, eine Drehbewegung abzugeben und zumindest ein Übertragungs-Eingriffsteil (322) aufweist; und
zumindest ein Übertragungselement (33), wobei das zumindest eine Übertragungselement (33) so ausgelegt ist, dass es zwischen einer ersten Position, in der es mit dem Übertragungs-Eingriffsteil (322) in Eingriff gebracht werden kann, und einer zweiten Position, in der es außer Eingriff ist, bewegbar ist,
**dadurch gekennzeichnet, dass** das Eingangselement (31) zumindest einen Vorsprung (312) aufweist, der sich in einer radialen Richtung relativ zur Drehachse (AX) erstreckt; und dass sich das zumindest eine Übertragungselement (33) in einem Drehbewegungspfad des Vorsprungs (312) befindet und in der Lage ist, an dem Vorsprung (312) anzuliegen und angetrieben zu werden, um sich in die erste Position zu bewegen, wobei die Verschiebung des zumindest einen Übertragungselements (33) zwischen der ersten Position und der zweiten Position eine Komponente in radialer Richtung aufweist.

2. Kupplung nach Anspruch 1,
**dadurch gekennzeichnet, dass** die Kupplung ferner ein Vorspannelement umfasst, welches das zumindest eine Übertragungselement (33) in Richtung der zweiten Position vorspannt; wobei vorzugsweise das Vorspannelement eine Feder (35) ist, wobei die Feder (35) mit einem Ende mit dem zumindest einen Übertragungselement (33) und mit einem anderen Ende mit dem Eingangselement (31) oder einem Befestigungselement (34) zur Befestigung des zumindest einen Übertragungselements (33) verbunden ist.

3. Kupplung nach Anspruch 1,
**dadurch gekennzeichnet, dass** das zumindest eine Übertragungselement (33) in der Lage ist, an dem Vorsprung (312) anzuliegen und angetrieben zu werden, um sich in die zweite Position zu bewegen; wobei vorzugsweise an einer Innenseite des zumindest einen Übertragungselements (33) eine scharfkantige Erhebung (332) vorgesehen ist, wobei die scharfkantige Erhebung (332) an dem Vorsprung (312) anliegen kann, wenn sich das Eingangselement (31) in einer Richtung (F1) entgegengesetzt zu einer Antriebsrichtung dreht.

4. Kupplung nach Anspruch 2 oder 3,
**dadurch gekennzeichnet, dass** die Kupplung so ausgelegt ist, dass sich das Eingangselement (31) um einen vorbestimmten Winkel in einer Richtung (F1) entgegengesetzt zu einer Antriebsrichtung dreht, wenn die Abgabe der Drehbewegung unterbrochen wird.

5. Kupplung nach einem der Ansprüche 1 bis 4,
**dadurch gekennzeichnet, dass** sich das zumindest eine Übertragungselement (33) in einer Ebene senkrecht zur Drehachse (AX) bewegt; wobei vorzugsweise das zumindest eine Übertragungselement (33) sich in der Ebene zwischen der ersten Position und der zweiten Position entlang einer relativ zur radialen Richtung geneigten geraden Linie bewegt.

6. Kupplung nach einem der Ansprüche 1 bis 5,
**dadurch gekennzeichnet, dass** der Vorsprung (312) drei Vorsprünge umfasst, die in gleichmäßigen Abständen in Umfangsrichtung um die Drehachse (AX) angeordnet sind, und dass das zumindest eine Übertragungselement (33) drei Übertragungselemente umfasst, die in einer Eins-zu-Eins-Entsprechung zu den Vorsprüngen (312) angeordnet sind.

7. Kupplung nach einem der Ansprüche 1 bis 6,
**dadurch gekennzeichnet, dass** das Übertragungs-Eingriffsteil (322) des Ausgangselements (32) eine parallel zur Drehachse (AX) verlaufende Anschlagwand umfasst, wobei das zumindest eine Übertragungselement (33) an der Anschlagwand anliegt, um einen Eingriff mit dem Übertragungs-Eingriffsteil (322) zu bewirken; wobei vorzugsweise die Anschlagwand sich im Wesentlichen in radialer Richtung erstreckt; wobei vorzugsweise dann, wenn sich das zumindest eine Übertragungselement (33) in der zweiten Position befindet, das zumindest eine Übertragungselement (33) sich außerhalb eines Drehbewegungspfads der Anschlagwand befindet.

8. Kupplung nach Anspruch 7,
**dadurch gekennzeichnet, dass** das Ausgangselement (32) mit einer Steuerkurvenfläche (323) versehen ist, die sich parallel zur Drehachse (AX) erstreckt; wobei die Steuerkurvenfläche (323) zwischen zwei aneinandergrenzenden Anschlagwänden angeordnet ist und ein radial äußeres Ende einer der Anschlagwände mit einem radial inneren Ende der anderen angrenzenden Anschlagwand verbindet, wobei zumindest ein Teil der Steuerkurvenfläche (323) eine gekrümmte Fläche ist.

9. Kupplung nach Anspruch 1,
**dadurch gekennzeichnet, dass** in Richtung der Antriebskraft die Drehwinkelgeschwindigkeit des Ausgangselements (32) größer oder gleich der Drehwinkelgeschwindigkeit des Eingangselements (31) ist.

10. Kupplung nach einem der Ansprüche 1 bis 9,
**dadurch gekennzeichnet, dass** die Kupplung ferner ein Befestigungselement (34) zum Befestigen des zumindest einen Übertragungselements (33) umfasst, wobei das Befestigungselement (34) mit einem länglichen Schlitz versehen ist, der einen Bewegungspfad des zumindest einen Übertragungselements (33) zwischen der ersten Position und der zweiten Position definiert; wobei vorzugsweise der längliche Schlitz eine gekrümmte Fläche aufweist, damit das zumindest eine Übertragungselement (33) in dem länglichen Schlitz schwenken kann.

11. Kupplung nach Anspruch 10,
**dadurch gekennzeichnet, dass**
das Ausgangselement (32) mit einer Aussparung (324) versehen ist und zumindest eines aus dem zumindest einen Übertragungselement (33), dem Befestigungselement (34) und dem Eingangselement (31) zumindest teilweise in der Aussparung (324) angeordnet ist; oder
das Eingangselement mit einer Aussparung versehen ist und zumindest eines aus dem zumindest einen Übertragungselement, dem Befestigungselement und dem Ausgangselement zumindest teilweise in der Aussparung angeordnet ist.

12. Kupplung nach einem der Ansprüche 9 bis 11,
**dadurch gekennzeichnet, dass** das Befestigungselement (34) mit einem Befestigungsschlitz (344) versehen ist, der als vertiefte Ausnehmung ausgebildet ist, wobei das Eingangselement (32) in der vertieften Ausnehmung aufgenommen ist.

13. Kupplung nach einem der Ansprüche 9 bis 12,
**dadurch gekennzeichnet, dass** das Befestigungselement (34") mit einem Dämpfungselement (345) versehen ist, wobei das Dämpfungselement (345) dazu ausgelegt ist, eine Dämpfung bereitzustellen, sodass das Befestigungselement (34") dazu neigt, stationär zu verbleiben; wobei vorzugsweise das Dämpfungselement (345) aus einem Gummi- oder Silikongummimaterial besteht und sich radial nach außen relativ zum Befestigungselement (34") erstreckt; wobei vorzugsweise das Dämpfungselement (345) eine Dämpfung bereitstellt, indem es an einem anderen Element als dem Eingangselement und dem Übertragungselement reibt, insbesondere indem es an einem die Kupplung aufnehmenden Getriebegehäuse (22) reibt.

14. Arbeitsmaschine,
**dadurch gekennzeichnet, dass** sie eine Antriebsmaschine, zumindest ein Rad und die Kupplung nach einem der Ansprüche 1 bis 13 umfasst, wobei die Antriebsmaschine das Eingangselement der Kupplung antreibt und das Ausgangselement der Kupplung zumindest eines des zumindest einen Rads in Drehung versetzt.

15. Arbeitsmaschine nach Anspruch 14,
**dadurch gekennzeichnet, dass** die Arbeitsmaschine zwei spiegelbildlich angeordnete Kupplungen umfasst, wobei jede Kupplung mit zumindest einem entsprechenden Rad gekoppelt ist.

## Revendications

1. Embrayage comprenant :
un élément d'entrée (31), l'élément d'entrée (31) étant conçu pour recevoir une force d'entraînement et pouvant tourner autour d'un axe de rotation (AX) sous l'action de la force d'entraînement ;
un élément de sortie (32), l'élément de sortie (32) étant conçu pour fournir un mouvement de rotation et comportant au moins une partie d'engagement de transmission (322) ; et
au moins un élément de transmission (33), ledit au moins un élément de transmission (33) étant conçu pour être mobile entre une première position dans laquelle il peut s'engager avec la partie d'engagement de transmission (322) et une deuxième position de désengagement,
**caractérisé en ce que**
l'élément d'entrée (31) comprend au moins une saillie (312) s'étendant dans une direction radiale par rapport à l'axe de rotation (AX) ; et ledit au moins un élément de transmission (33) est situé dans un trajet de mouvement de rotation de la saillie (312) et est apte à venir en butée contre la saillie (312) et à être entraîné pour se déplacer vers la première position, le déplacement dudit au moins un élément de transmission (33) entre la première position et la deuxième position ayant une composante dans la direction radiale.

2. Embrayage selon la revendication 1,
**caractérisé en ce que** l'embrayage comprend en outre un élément de sollicitation qui sollicite ledit au moins un élément de transmission (33) vers la deuxième position ; de préférence, l'élément de sollicitation est un ressort (35), le ressort (35) ayant une extrémité couplée audit au moins un élément de transmission (33) et une autre extrémité couplée à l'élément d'entrée (31) ou à un élément de montage (34) pour monter ledit au moins un élément de transmission (33).

3. Embrayage selon la revendication 1,
**caractérisé en ce que** ledit au moins un élément de transmission (33) est apte à venir en butée contre la saillie (312) et à être entraîné pour se déplacer vers la deuxième position ; de préférence, un bossage vif (332) est prévu sur un côté intérieur dudit au moins un élément de transmission (33), le bossage vif (332) pouvant venir en butée contre la saillie (312) lorsque l'élément d'entrée (31) tourne dans une direction (F1) opposée à une direction d'entraînement.

4. Embrayage selon la revendication 2 ou 3,
**caractérisé en ce que** l'embrayage est conçu de telle sorte que l'élément d'entrée (31) tourne d'un angle prédéterminé dans une direction (F1) opposée à une direction d'entraînement lorsque la sortie du mouvement de rotation est arrêtée.

5. Embrayage selon l'une des revendications 1 à 4,
**caractérisé en ce que** ledit au moins un élément de transmission (33) se déplace dans un plan perpendiculaire à l'axe de rotation (AX) ; de préférence, ledit au moins un élément de transmission (33) se déplace dans le plan entre la première position et la deuxième position le long d'une ligne droite inclinée par rapport à la direction radiale.

6. Embrayage selon l'une des revendications 1 à 5,
**caractérisé en ce que** la saillie (312) comprend trois saillies disposées à intervalles réguliers dans la direction circonférentielle autour de l'axe de rotation (AX), et ledit au moins un élément de transmission (33) comprend trois éléments de transmission disposés en correspondance biunivoque avec les saillies (312).

7. Embrayage selon l'une des revendications 1 à 6,
**caractérisé en ce que** la partie d'engagement de transmission (322) de l'élément de sortie (32) comprend une paroi d'arrêt s'étendant parallèlement à l'axe de rotation (AX), ledit au moins un élément de transmission (33) venant en butée contre la paroi d'arrêt pour réaliser l'engagement avec la partie d'engagement de transmission (322) ; de préférence, la paroi d'arrêt s'étend sensiblement dans la direction radiale ; de préférence, lorsque ledit au moins un élément de transmission (33) est situé à la deuxième position, ledit au moins un élément de transmission (33) est situé à l'extérieur d'un trajet de mouvement de rotation de la paroi d'arrêt.

8. Embrayage selon la revendication 7,
**caractérisé en ce que** l'élément de sortie (32) est muni d'une surface de came (323) s'étendant parallèlement à l'axe de rotation (AX) ; la surface de came (323) est située entre deux parois d'arrêt adjacentes et relie une extrémité radialement extérieure de l'une des parois d'arrêt à une extrémité radialement intérieure de l'autre paroi d'arrêt adjacente, au moins une partie de la surface de came (323) étant une surface courbe.

9. Embrayage selon la revendication 1,
**caractérisé en ce que**, dans la direction de la force d'entraînement, la vitesse angulaire de rotation de l'élément de sortie (32) est supérieure ou égale à la vitesse angulaire de rotation de l'élément d'entrée (31).

10. Embrayage selon l'une des revendications 1 à 9,
**caractérisé en ce que** l'embrayage comprend en outre un élément de montage (34) pour monter ledit au moins un élément de transmission (33), l'élément de montage (34) étant muni d'une fente allongée définissant un trajet de mouvement dudit au moins un élément de transmission (33) entre la première position et la deuxième position ; de préférence, la fente allongée présente une surface courbe pour permettre audit au moins un élément de transmission (33) de pivoter dans la fente allongée.

11. Embrayage selon la revendication 10,
**caractérisé en ce que**
l'élément de sortie (32) est muni d'un évidement (324), et au moins l'un parmi ledit au moins un élément de transmission (33), l'élément de montage (34) et l'élément d'entrée (31) est au moins partiellement disposé dans l'évidement (324) ; ou
l'élément d'entrée est muni d'un évidement, et au moins l'un parmi ledit au moins un élément de transmission, l'élément de montage et l'élément de sortie est au moins partiellement disposé dans l'évidement.

12. Embrayage selon l'une des revendications 9 à 11,
**caractérisé en ce que** l'élément de montage (34) est muni d'une fente de montage (344) formée comme une cavité enfoncée, l'élément d'entrée (32) étant logé dans la cavité enfoncée.

13. Embrayage selon l'une des revendications 9 à 12,
**caractérisé en ce que** l'élément de montage (34") est muni d'un élément d'amortissement (345), l'élément d'amortissement (345) étant conçu pour pouvoir fournir un amortissement de sorte que l'élément de montage (34") ait tendance à rester stationnaire ; de préférence, l'élément d'amortissement (345) est constitué d'un matériau en caoutchouc ou en caoutchouc silicone et s'étend radialement vers l'extérieur par rapport à l'élément de montage (34") ; de préférence, l'élément d'amortissement (345) assure l'amortissement en frottant contre un élément autre que l'élément d'entrée et l'élément de transmission, en particulier en frottant contre un carter de transmission (22) logeant l'embrayage.

14. Machine de travail,
**caractérisée en ce qu'**elle comprend un moteur principal, au moins une roue et l'embrayage selon l'une des revendications 1 à 13, le moteur principal entraînant l'élément d'entrée de l'embrayage, et l'élément de sortie de l'embrayage entraînant en rotation au moins une de ladite au moins une roue.

15. Machine de travail selon la revendication 14,
**caractérisée en ce que** la machine de travail comprend deux embrayages disposés de manière symétrique, chaque embrayage étant couplé à au moins une roue correspondante.
